# EUROPÄISCHE PATENTSCHRIFT

(11) **EP 1 327 277 B1**
(45) Veröffentlichungstag und Bekanntmachung des Hinweises auf die Patenterteilung: **02.12.2009**
(21) Anmeldenummer: 01974034.9
(22) Anmeldetag: 14.09.2001
(51) Int. Cl.: H01M 8/04

(54) **BRENNSTOFFZELLENANLAGE**
FUEL CELL INSTALLATION
INSTALLATION A PILES A COMBUSTIBLE

(30) Priorität: 27.09.2000 DE 10047914
(43) Veröffentlichungstag der Anmeldung: 16.07.2003
(73) Patentinhaber: SIEMENS AKTIENGESELLSCHAFT, 80333 München (DE)
(72) Erfinder: BETTE, Willi, 91056 Erlangen (DE); COERLIN, Detlef, 91056 Erlangen (DE); STENGER, Herbert, 90559 Burgthann (DE)
(86) Internationale Anmeldenummer: PCT/DE2001/003529
(87) Internationale Veröffentlichungsnummer: WO 2002/027849

(56) Entgegenhaltungen:
- EP-A- 0 263 052
- EP-A- 0 459 165
- EP-A- 0 476 610
- US-A- 5 306 575
- US-A- 5 413 878

## Beschreibung

Die Erfindung betrifft eine Brennstoffzellenanlage.

In einer Brennstoffzellenanlage mit einer Anzahl von Brennstoffzellen wird durch die Zusammenführung von Wasserstoff (H₂) und Sauerstoff (O₂) in einer elektrochemischen Reaktion elektrisch Energie und Wärme erzeugt. Hierfür wird den Brennstoffzellen Wasserstoff und Sauerstoff entweder in ihrer reinen Form oder als Brenngas mit einem Wasserstoffanteil und als Luft zugeführt. Die Art dieser Betriebsgase, die der Brennstoffzelle zugeführt werden, hängt wesentlich von der Betriebsumgebung ab, in der die Brennstoffzellenanlage betrieben wird. Wird die Brennstoffzellenanlage beispielsweise in einem hermetisch verschlossenen Raum betrieben, so ist darauf zu achten, dass die Brennstoffzellenanlage eine möglichst geringe Menge an Abgasen produziert. Denn da diese Abgase den hermetisch verschlossenen Raum nicht verlassen können, müssen sie gesammelt und gegebenenfalls komprimiert werden. Eine solche Brennstoffzellenanlage wird daher mit reinem Sauerstoff und reinem Wasserstoff betrieben, mit dem Ziel, dass diese Betriebsgase während des Betriebs der Brennstoffzellenanlage im wesentlichen rückstandsfrei zu Wasser (H₂O) reagieren und die Brennstoffzellenanlage somit so gut wie keine Abgase erzeugt.

Die von einer Brennstoffzelle während des Betriebs abgegebene. Leistung hängt u.a. von der Menge der Betriebsgase ab, die in die Brennstoffzelle hineinströmen. Ist der Strom der Betriebsgase in die Brennstoffzelle gering, so ist auch die Leistungsabgabe der Brennstoffzelle gering. Mit steigender Brenngaszufuhr kann auch die Leistung der Brennstoffzelle bis zu einem Sättigungswert steigen. Um eine gute Leistung der Brennstoffzelle zu erreichen ist es notwendig, mehr Betriebsgase durch eine Brennstoffzelle durchzuleiten, als die Brennstoffzelle während des Betriebs verbraucht. Es lässt sich somit nicht vermeiden, dass eine effizient betriebene Brennstoffzelle Abgase erzeugt, nämlich mindestens die unverbraucht durch die Brennstoffzellen hindurchgeströmten Betriebsgase.

Aus der EP 0 596 366 B1 ist ein Brennstoffzellenblock mit einer Vielzahl von Brennstoffzellen bekannt, wobei die Brennstoffzellen des Blocks in mehrere Zellengruppen zusammengefasst sind. Bei Betrieb dieses Brennstoffzellenblocks strömen die Betriebsgas parallel in die Brennstoffzellen der ersten Gruppe. Die Betriebsgashaltigen Abgase der Brennstoffzellen dieser Gruppe werden parallel in die Brennstoffzellen einer zweiten Zellengruppe eingeleitet und die Abgase der zweiten Zellengruppe werden einer dritten Zellengruppe zugeführt. Auf diese Weise werden die Betriebsgase von Gruppe zu Gruppe immer vollständiger aufgebraucht. Es hat sich jedoch herausgestellt, dass die Herstellung eines solchen sogenannten kaskadierten Brennstoffzellenblocks sehr aufwendig ist.

US 5 413 878 offenbart ein Brennstoffzellen-System, wo die Betriebgase im Sinne einer Kaskadierung nacheinander durchgeführt werden und die Zahlenverhältnisse zwischen den Brennstoffzellen jeder Stufe Eins ist.

Es ist daher die Aufgabe der vorliegenden Erfindung, eine gegenüber dem Stand der Technik einfacher herzustellende Brennstoffzellenanlage anzugeben, die so betreibbar ist, dass sie während des Betriebs möglichst wenig Abgase erzeugt.

Diese Aufgabe wird gelöst durch eine Brennstoffzellenanlage, die erfindungsgemäß eine erste und zweite Stufe aufweist, wobei jede Stufe mindestens einen Brennstoffzellenblock, eine Betriebsgaszuführung und eine Betriebsgasabführung aufweist, wobei die Betriebsgasabführung der ersten Stufe mit der Betriebsgaszuführung der zweiten Stufe verbunden ist.

Die Erfindung geht in einem ersten Schritt von der .Überlegung aus, dass die Zu- und Ableitung der Brenngase und des entstehenden Produktwassers zu bzw. von den einzelnen Brennstoffzellengruppen durch Kanäle erfolgt, die innerhalb des kaskadierten Brennstoffzellenblocks liegen. Diese Kanäle werden durch gezielte Formgebung der Brennstoffzellen gebildet, so dass die Formgebung der einzelnen Brennstoffzellen abhängig ist von der Art und Anzahl der durch sie gebildeten Kanäle. Je nach dem wie viele Kaskadierungs-Gruppen ein kaskadierter Brennstoffzellenblock umfasst, sind viele verschiedene Zu- und Ableitungen und damit auch eine Vielzahl von verschieden geformten Brennstoffzellen nötig. Durch diese große Anzahl verschiedener Brennstoffzellen verteuert sich die Herstellung eines kaskadierten Brennstoffzellenblocks gegenüber der Herstellung eines Brennstoffzellenblocks mit im wesentlichen nur gleichartigen Zellen erheblich. Eine Verrohrung der einzelnen Brennstoffzellengruppen außerhalb des kaskadierten Brennstoffzellenblocks führt zur Lösung dieses Problems.

Die Erfindung geht in einem weiteren Schritt von der Überlegung aus, dass die Herstellung verschiedener Brennstoffzellenanlagen, beispielsweise Brennstoffzellenanlagen mit verschiedenen Leistungen, aufwendig ist, wenn für jede Brennstoffzellenanlage ein für sie speziell ausgelegter kaskadierter Brennstoffzellenblock entwickelt werden muss. Durch die Konzeption der einzelnen Brennstoffzellengruppen innerhalb des kaskadierten Brennstoffzellenblocks alls eigenständige Brennstoffzellenblöcke kann eine Brennstoffzellenanlagemodulartig aus einer Anzahl von Brennstoffzellenblöcken zusammengesetzt werden. Je nach Leistungsanforderung der Brennstoffzellenanlage werden mehr oder weniger oder größere oder kleinere Brennstoffzellenblöcke zur Brennstoffzellenanlage zusammengeschaltet. Die Brennstoffzellenanlage umfasst somit mehrere Stufen mit jeweils mindestens einem Brennstoffzellenblock, durch die die Betriebsgase im Sinne der Kaskadierung nacheinander durchgeführt werden.

Die Blöcke einer Kaskadenstufe sind betriebsgasseitig parallel geschaltet, wobei die Abgase dieser Blöcke der nächstfolgenden Stufe zugeleitet werden. Je nach Anforderung an eine Brennstoffzellenanlage ist die Brennstoffzellenanlage somit aus einer Anzahl von Brennstoffzellenblöcken zusammengesetzt, wobei sich verschiedene Brennstoffzellenanlagen im wesentlichen nur durch die Anzahl der Brennstoffzellenblöcke unterscheiden, durch die sie gebildet werden. Hierdurch wird die Herstellung einer Brennstoffzellenanlage, an die die Anforderung.gestel.lt ist, möglichst wenig Abgase zu erzeugen, in erheblichem Umfang vereinfacht und somit verbilligt.

Zeckmäßigerweise ist die Brennstoffzellenanlage aus gleichartigen Brennstoffzellenblöcken modular aufgebaut. Unter gleichartigen Brennstoffzellenblöcken werden Brennstoffzellenblöcke verstanden, die bezüglich der Betriebsgaskanäle in den Blöcken, der Brennstoffzellenform sowie der Anschlüsse für die Brenngasver- und Entsorgung sowie der elektrischen Anschlüsse gleichartig aufgebaut sind. Hierbei ist es jedoch nicht notwendig, dass die Brennstoffzellenblöcke jeweils die gleiche Anzahl von Brennstoffzellen aufweisen. Solche Brennstoffzelleblöcke können in großer Anzahl und preiswert in Serienproduktion hergestellt werden. Durch die gleichartigen Anschlüsse ist auch die Verrohrung zwischen den einzelnen Brennstoffzellenblöcken mit gleichartigen Elementen somit preiswert möglich.

In einer vorteilhaften Ausgestaltung der Erfindung umfasst die Brennstoffzellenanlage eine Endstufe, die eine Betriebsgaszuführung aufweist, die mit einer Betriebsgasabführung der vorhergehenden Stufe verbunden ist und die eine weitere Betriebsgaszuführung aufweist, die mit einer Betriebsgaszuführung einer vorhergehenden Stufe verbunden ist. Unter einer Endstufe wird eine Stufe mit einem Brennstoffzellenblock verstanden, der dazu ausgelegt ist, im Betrieb ein Betriebsgas vollständig aufzubrauchen. "Vorhergehend" ist in dem Sinne zu verstehen, dass das der Endstufe zugeführte Betriebsgas schon durch diese vorhergehende Stufe geströmt ist.

Werden im Gegensatz zu dieser Ausgestaltung der Erfindung einer dritten Stufe als Betriebsgase lediglich die Abgase der zweiten Stufe zugeführt, so werden der Wasserstoff und.der Sauerstoff in der dritten Stufe nur dann verbraucht werden können, wenn Wasserstoff und Sauerstoff innerhalb der dritten Stufe genau in der stöchiometrischen Menge, also im Verhältnis 1:2 vorliegen. Es hat sich nun gezeigt, dass dieses stöchiometrische Verhältnis nur sehr schwer genau einzustellen ist, insbesondere dann., wenn die Brennstoffzellenanlage Lastwechseln unterworfen ist. Die Folge einer nicht-stöchiometrischen Zufuhr der Betriebsgase in die dritte Stufe ist, dass eines der Betriebsgase nicht vollständig aufgebraucht werden kann. Dieses Betriebsgas wird also bei der Entsorgung von im Laufe der Zeit angefallenen Inertgasen mit aus der dritten Stufe ausgeblasen und befindet sich somit im Abgas der Brennstoffzellenanlage. Hieraus ergeben sich Sicherheitsprobleme, insbesondere bei einer Brennstoffzellenanlage, die in einem hermetisch abgeschlossenen Raum betrieben wird, wie dies beispielsweise in einem Unterseeboot der Fall ist.

Ist jedoch beispielsweise die Sauerstoffzuführung der dritten Stufe mit der Sauerstoffabführung der zweiten Stufe verbunden, wobei die Wasserstoffzuführung der dritten Stufe jedoch beispielsweise mit der Wasserstoffzuführung der ersten Stufe verbunden ist, so wird die elektrochemische Reaktion in der dritten Stufe mit dem Restsauerstoff aus der zweiten Stufe und noch gänzlich unverbrauchtem Wasserstoffgas betrieben. Stöchiometrisch liegt der Wasserstoff somit in einem Überschuss vor, was dazu führt, dass der noch vorhandene Sauerstoff vollständig aufgebraucht wird. Die Kathodenseite dieses Brennstoffzellenblocks weist somit - abgesehen von einer geringen. Inertgasmenge - kein Abgas auf. Das anodenseitige Abgas, also der überschüssige Wasserstoff, wird aus dieser dritten Stufe abgeführt und beispielsweise in die Wasserstoffzuführung der ersten oder zweiten Stufe eingeleitet. Die Anodenseite der Endstufe ist smit mit der Anodenseite der ersten Stufe gasseitig parallel geschaltet.

Bei einer solchen Ausgestaltung der dritten Stufe ist es zweckmäßig, dass die dritte Stufe mindestens zwei Brennstoffzellenblöcke umfasst, die jeweils eine Betriebsgaszuführung aufweisen, die mit einer Betriebsgasabführung der vorhergehenden Stufe verbunden ist und die eine weitere Betriebsgaszuführung aufweisen, die mit einer Betriebsgaszuführung einer vorhergehenden Stufe verbunden ist. So wird beispielsweise in einem der beiden Blöcke wie oben beschrieben der Sauerstoff vollständig aufgebraucht und dem anderen Brennstoffzellenblock wird in analoger Weise Sauerstoff im Überschuss zugeführt und somit der Wasserstoff komplett aufgebraucht. Auf diese Weise wird errecht, dass die Brennstoffzellenanlage sowohl anodenseitig als auch kathodenseitig mit einer sehr geringen Abgasmenge betrieben werden kann. Die Abgase setzen sich zusammen aus nicht reaktionsfähigen Inertgasen, die kathodenseitig sowie auch anodenseitig sehr gründlich aus den Betriebsgasen herausgefiltert werden.

Ein weiterer Vorteil lässt sich dadurch erreichen, dass die erste Stufe eine erste Anzahl, die zweite Stufe eine zweite Anzahl und die dritte Stufe eine dritte Anzahl von Brennstoffzellen aufweist, wobei die erste Anzahl mindestens doppelt so groß ist, wie die zweite Anzahl und die zweite Anzahl mindestens doppelt so groß ist, wie die dritte Anzahl. Durchströmen die Betriebsgase eine Stufe der Brennstoffzellenanlage, wird ein Teil der Betriebsgase verbraucht. Somit stehen der nachfolgenden Stufe weniger Betriebsgase zur Verfügung. Wird von den Brennstoffzellen eine hohe Leistung erwartet, so ist es sinnvoll, überschüssiges Betriebsgas durch die Brennstoffzelle hindurchzuführen. Die Brennstoffzelle verbraucht somit nur einen Teil des durch sie hindurchströmenden Betriebsgases. Es hat sich nun herausgestellt, dass ein günstiges Verhältnis zwischen in einer Stufe verbrauchtem und durch eine Stufe hindurchströmenden Betriebsgas dann erreicht wird, wenn die Anzahl von Brennstoffzellen einer nachfolgenden Stufe kleiner als die Hälfte der Anzahl der vorhergehenden Stufe ist. Noch besser ist 25% bis 40%, insbesondere 30% bis 35% als Anzahl für eine nachfolgende Stufe.

In weiterer Ausgestaltung der Erfindung sind die Brennstoffzellenblöcke der Brennstoffzellenanlage für den Betrieb mit reinem Sauersoff (O₂) und reinem Wasserstoff (H₂) ausgelegt. Im Handel erhältlicher reiner Sauerstoff und reiner Wasserstoff weist nur einen sehr kleinen Inertgasanteil auf. Bei Betrieb der Brennstoffzellenanlage mit diesen reinen Betriebsgasen ist somit gewährleisten, dass die Brennstoffzellenanlage in der Weise betrieben werden kann, dass nur sehr' wenige Abgase entstehen.

In weiterer Ausgestaltung der Erfindung sind zwischen den Stufen Wasserabscheider angeordnet. Dies hat den Vorteil, dass das in den Brennstoffzellen entstehende Produktwasser und das vom Gas abgetrennte Kondenswasser nicht in die Brennstoffzellen der nachfolgenden Stufe eingespült wird. Somit wird ein Fluten der Brennstoffzellen durch Wasser wirksam verhindert und damit der Wirkungsgrad der Brennstoffzellen erhöht.

In bevorzugter Ausgestaltung der Erfindung ist ein Brennstoffzellenblock der dritten Stufe als Restgasentsorgungsblock ausgelegt. Mit einem solchen Brennstoffzellenblock ist eine Vorrichtung verbunden, die das Entsorgen von Inertgas aus dem Block regelt. Dies geschieht beispielsweise durch eine Spannungsüberwachung einer oder mehrerer Brennstoffzellen des Brennstoffzellenblocks. Sammelt sich eine größere Menge Inertgas in diesem Brennstoffzellenblock an, so sinkt die von diesem Brennstoffzellenblock erzeugte Spannung. Bei Unterschreiten der.Spannung unter einen festgelegten Wert wird die Inertgasentsorgung aus dem Brennstoffzellenblock veranlasst. Ebenso möglich ist auch die Parallelschaltung von zwei oder mehreren Brennstoffzellen des Restgasentsorgungsblocks und die Überwachung des Stroms dieser Zellen. Der Strom dieser parallel geschalteten Brennstoffzellen ist ein Maß für deren Füllung mit Inertgas. Bei Unterschreiten eines festgelegten Stromwertes wird die Restgasentsorgung aus dem Brennstoffzellenblock veranlasst.

Ein Ausführungsbeispiel der Erfindung wird anhand einer Zeichnung näher erläutert. Die einzige Figur der Zeichnung zeigt in schematischer Weise eine Brennstoffzellenanlage 1, die aus Sicht der Betriebsgasver- und entsorgung vier hintereinander geschaltete Stufen 2, 4, 6 und 8 aufweist. Die erste Stufe 2 umfaßt drei Brennstoffzellenblöcke 10, 12, 14, die betriebsgasseitig parallel geschaltet sind. Die zweite Stufe 4 und die dritte Stufe 6 weisen jeweils einen einzigen Brennstoffzellenblock 16 bzw. 18 auf. Die vierte Stufe 8 der Brennstoffzellenanlage 1 weist die beiden Brennstoffzellenblöcke 20 und 22 auf. Eben so gut kann die Stufe mit dem Bezugszeichen 4 als erste Stufe, die nachfolgende als zweite Stufe 6 und die letzte als dritte Stufe 8 bezeichnet werden.

Die Brennstoffzellenanlage ist für den Betrieb mit reinem Sauerstoff O₂ und reinem Wasserstoff H₂ ausgelegt. Während des Betriebs der Brennstoffzelleanlage strömt Wasserstoff H₂ durch die Leitung 24a parallel in die drei Brennstoffzellenblöcke 10, 12, 14 der im folgenden als erste Stufe 2 bezeichneten Stufe der Brennstoffzellenanlage 1. Es strömt ebenfalls, Sauerstoff O₂ durch eine durch Leitungen gebildete Betriebsgaszuführung 24b in die Brennstoffzellenblöcke 10, 12, 14 der ersten Stufe 2. Ein Teil der Betriebsgase Wasserstoff H₂ und Sauerstoff O₂ wird in der ersten Stufe 2 der Brennstoffzellenanlage 1 durch elektrochemische Reaktion in den Brennstoffzellen der Brennstoffzellenblöcke 10, 12, 14 verbraucht. Der Rest der Betriebsgase und Produktwasser sowie ein sehr geringer Teil an Inertgasen wird über die Betriebsgasabführungen 26a und 26b aus den Brennstoffzellenblöcken 10, 12, 14 ausgeleitet. Hierbei strömt das wasserstoffhaltige Abgas durch die Betriebsgasableitung 26a in einen Wasserabscheider 28a, und von dort weiter in den Brennstoffzellenblock 16 der zweiten Stufe 4. Das sauerstoffhaltige Abgas der Brennstoffzellenblöcke 10, 12, 14 strömt durch die Betriebsgasabführung 26b in einen Wasserabscheider 28b und von dort durch die Betriebsgaszuführung 30b in den Brennstoffzellenblock 16 der zweiten Stufe 4 der Brennstoffzellenanlage 1.

Die zweite Stufe 4 der Brennstoffzellenanlage 1 umfasst zwei Betriebsgasabführungen 32a und 32b, die über Wasserabscheider 34a und 34b mit den beiden Betriebsgaszuführungen 36a und 36b der dritten Stufe 6 der Brennstoffzellenanlage 1 verbunden sind. Das wasserstoffhaltige Abgas der dritten Stufe 6 wird über die Betriebsgasabführung 38a, den Wasserabscheider 40a und die Betriebsgaszuführung 42a der vierten Stufe 8 dem Brennstoffzellenblock 22 zugeführt. Das sauerstoffhaltige Abgas der dritten Stufe 6 wird über die Betriebsgasabführung 38b, den Wasserabscheider 40b und die Betriebsgaszuführung 42b der vierten Stufe dem Brennstoffzellenblock 20 zugeführt. Die Betriebsgaszuführung 44a der vierten Stufe 8 ist direkt mit der Betriebsgaszuführung 24a der ersten Stufe 2 verbunden. Die Betriebsgaszuführung 44b der'vierten Stufe 8 für das sauerstoffhaltige Betriebsgas ist direkt mit der Betriebsgaszuführung 24b der ersten Stufe 2 verbunden.

Das über die Wasserabscheider 28a, 28b, 34a, 34b und 40a, 40b abgeschiedene Wasser wird über gleichartige Ventile 46 und Wasserableitungen 48a und 48b aus den Stufen der Brennstoffzellenanlage 1 abgeleitet.

Die Brennstoffzellenblöcke 10, 12, 14', 16, 18, 20, 22 sind gleichartig aufgebaut. Sie weisen sowohl gleichartige wie auch gleich aufgebaute Brennstoffzellen als auch gleichartig gestaltete Betriebsgasanschlüsse auf. Die Brennstoffzellenblöcke 10, 12, 14 und 16 weisen jeweils 72 Brennstoffzellen auf, der Brennstoffzellenblock 18 weist 24 Brennstoffzellen auf, und die Brennstoffzellenblöcke 20 und 22 weisen jeweils 8 Brennstoffzellen auf.

Die erste Stufe 2 weist somit 218 Brennstoffzellen auf, die zweite Stufe 4 weist 72 und die dritte Stufe 6 weist 24 Brennstoffzellen auf. Die vierte Stufe 8 weist 2 mal 8 Brennstoffzellen auf. Was die Betriebsgasführung angeht, so wird sowohl der Wasserstoff H₂ als auch der Sauerstoff O₂ in der ersten Stufe parallel durch 218 Brennstoffzellen, in der zweiten Stufe 4 parallel durch 72 Brennstoffzellen, in der dritten Stufe 6 parallel durch 24 Brennstoffzellen und in der vierten Stufe 8 parallel durch 8 Brennstoffzellen geführt.

Durch die Betriebsgaszuführung 42b der vierten Stufen 8 wird sauerstoffhaltiges Betriebsgas dem Brennstoffzellenblock 20 zugeführt, das einen relativ hohen Inertgasanteil aufweist. Durch die Betriebsgaszuführung 44a der vierten Stufe 8 wird dem Brennstoffzellenblock 20 reiner Wasserstoff H₂ zugeführt. Während der Wasserstoff H₂ im Überschuss durch den Brennstoffzellenblock 20 hindurchgeleitet wird, ist der Strom des sauerstoffhaltigen Betriebsgases durch den Brennstoffzellenblock 20 so eingestellt, dass der gesamte Sauerstoff O₂, der durch die Betriebsgaszuführung 42b dem Brennstoffzellenblock 20 zugeleitet wird, im Brennstoffzellenblock 20 in die Reaktion mit dem Wasserstoff H₂ zu Wässer H₂O überführt wird. Das Kathodenabgas des Brennstoffzellenblocks 20 enthält somit Inertgas, Wasser und einen sehr geringen Restsauerstoffanteil. Es wird über das Ventil 50 aus der vierten Stufe 8 abgeführt.

Dem Brennstoffzellenblock 22 wird über die Betriebsgaszuführung 44b Sauerstoff O₂ zugeleitet, der im Überschuss durch die Brennstoffzellen des Brennstoffzellenblocks 22 dürchgeleitet wird.. Der Strom des Wasserstoffs H₂, der durch die Betriebsgaszuführung 42a in den Brennstoffzellenblock 22 gelangt, ist so eingestellt, dass im wesentlichen der gesamte Wasserstoff H₂ im Brennstoffzellenblock 22 verbraucht wird. Das Anodenabgas des Brennstoffzellenblocks 22 enthält somit im wesentlichen Inertgas, Wasser und einen sehr geringen Wasserstoffanteil. Es wird durch das Ventil 52 aus der vierten Stufe 8 ausgeleitet.

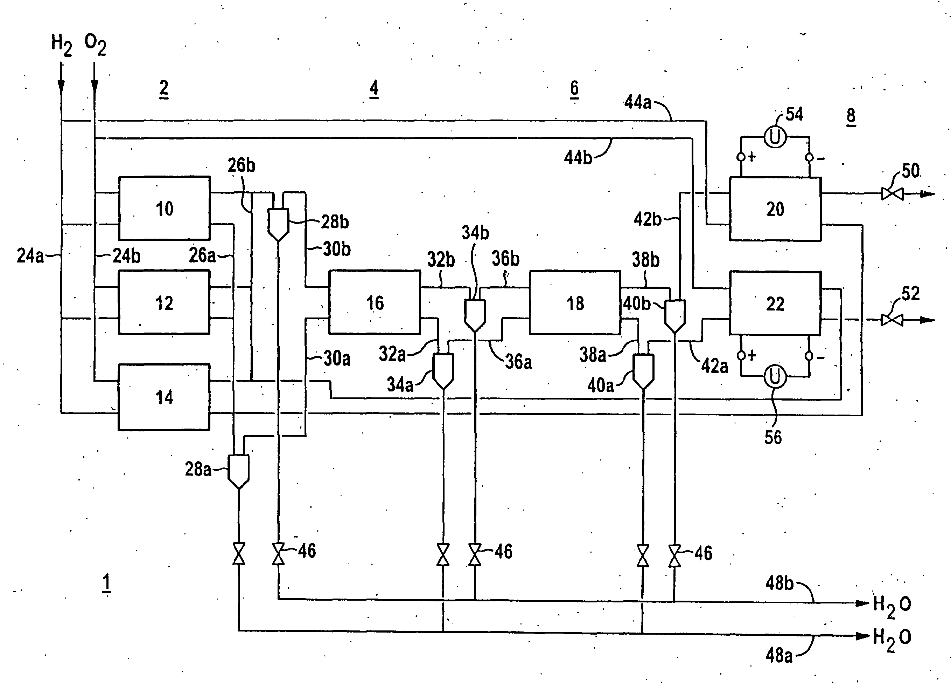

Die beiden Brennstoffzellenblöcke 20 und 22 der vierten Stufe 8 sind als Restgasentsorgungsblöcke ausgelegt. Sie weisen eine Spannungsüberwachung 54, 56 auf, die jeweils die Spannung einer oder mehrerer Brennstoffzellen des Brennstoffzellenblocks 20 bzw. 22 überwachen. Die Spannungsüberwachungen 54 und 56 sind mit einer in Figur 1 nicht näher dargestellten Regeleinheit verbunden, die auch die Ventile 50 und 52 steuert. Unterschreitet die Spannung der überwachten Zelle bzw. Zellen während des Betriebs der Brennstoffzellenanlage 1 einen festgelegten Wert, so wird die Restgasentsorgung aus den betreffenden Zellen durch die Öffnung des betreffenden Ventils 50 oder 52 eingeleitet.

## Patentansprüche

1. Brennstoffzellenanlage (1) mit einer ersten (2) und einer zweiten Stufe (4), wobei jede der beiden Stufen (2 bzw. 4) mindestens einen Brennstoffzellenblock (10; 12; 14 bzw- 16), eine Betriebsgaszuführung (24a; 24b bzw. 30a; 30b) und eine Betriebsgasabführung (26a; 26b bzw. 32a; 32b) aufweist, wobei die Betriebsgasabführung (26a, 26b) der ersten Stufe (2) mit der Betriebsgaszuführung (30a, 30b) der zweiten Stufe (4) verbunden ist und wobei die erste Stufe (2) eine erste Anzahl und die zweite Stufe (4) eine zweite Anzahl von Brennstoffzellen aufweist und die erste Anzahl mindestens doppelt so groß ist wie die zweite Anzahl.

2. Brennstoffzellenanlage (1) nach Anspruch 1, mit einer zusätzlichen dritten Stufe (6), die mindestens einen Brennstoffzellenblock (18), eine Betriebagaszuführung (36a, 36b) und eine Betriebsgasabführung (38a, 38b) aufweist, wobei die Betriebsgasabführung (32a, 32b) der zweiten Stufe (4) mit der Betriebsgaszuführung (36a, 36b) der dritten Stufe (6) verbunden ist und wobei die Anzahl der Brennstoffzellen der zweiten Stufe (4) mindestens doppelt so groß ist wie die Anzahl der Brennstoffzellen der dritten Stufe (6).

3. Brennstoffzellenanlage (1) nach Anspruch 1 oder 2, bei der die Stufen (2, 4, 6) gleichartige Brennstoffzellenblöcke (10, 12, 14, 16, 18) umfassen.

4. Brennstoffzellenanlage (1) nach einem der vorhergehenden Ansprüche mit einer Endstufe (8), die eine Betriebsgaszuführung (42a, 42b) aufweist, die mit einer Betriebsgasabführung (38a,38b) der vorhergehenden Stufe (6) verbunden ist und die eine weitere Betriebsgaszuführung aufweist, die mit einer Betriebsgaszuführung (24a,24b) einer vorhergehenden Stufe verbunden ist.

5. Brennstoffzellenanlage (1) nach Anspruch 4, bei der die Endstufe (8) mindestens zwei Brennstoffzellenblöcke (20, 22) umfasst, die jeweils eine Betriebsgaszuführung (44a, 44b) aufweisen, die mit einer Betriebsgasabführung (38a, 38b) der vorhergehenden Stufe (6) verbunden ist und die eine weitere Betriebsgaszuführung aufweisen, die mit einer Betriebsgaszuführung (24a, 24b) einer vorhergehenden Stufe verbunden ist.

6. Brennstoffzellenanlage (1) nach einem der vorhergehenden Ansprüche, bei der die Anzahl der Brennstoffzellen einer Stufe (4 bzw. 6) im Vergleich zur Anzahl der Brennstoffzellen einer vorhergehenden Stufe (2 bzw. 4) 25 % bis 40 %, insbesondere 30 % bis 35 %, der Anzahl der Brennstoffzellen der vorhergehenden Stufe (2 bzw. 4) beträgt.

7. Brennstoffzellenanlage (1) nach einem der vorhergehenden Ansprüche, bei der die Brennstoffzellenblöcke (10, 12, 14, 16, 18, 20, 22) für den Betrieb mit reinem Sauerstoff (O₂) und reinem Wasserstoff (H₂) ausgelegt sind.

8. Brennstoffzellenanlage (1) nach einem der vorhergehenden Ansprüche, bei der zwischen den Stufen (2, 4, 6, 8) Wasserabscheider (28a, 28b, 34a, 34b, 40a, 40b) angeordnet sind.

9. Brennstoffzellenanlage (1) nach einem der vorhergehenden Ansprüche, bei der ein Brennstoffzellenblock (20, 22) der letzten Stufe (8) als Restgasentsorgungsblock ausgelegt ist.

## Claims

1. Fuel cell system (1) having a first stage (2) and a second stage (4), each of the two stages (2 and 4) having at least one fuel cell block (10; 12; 14 and 16), an operating-gas feed (24a; 24b and 30a; 30b) and an operating-gas discharge (26a; 26b and 32a; 32b), the operating-gas discharge (26a, 26b) of the first stage (2) being connected to the operating-gas feed (30a, 30b) of the second stage (4), and the first stage (2) having a first number of fuel cells and the second stage (4) having a second number of fuel cells, and the first number being at least twice the second number.

2. Fuel cell system (1) according to Claim 1, having an additional third stage (6), which has at least one fuel cell block (18), an operating-gas feed (36a, 36b) and an operating-gas discharge (38a, 38b), the operating-gas discharge (32a, 32b) of the second stage (4) being connected to the operating-gas feed (36a, 36b) of the third stage (6), and the number of fuel cells in the second stage (4) being at least twice the number of fuel cells in the third stage (6).

3. Fuel cell system (1) according to Claim 1 or 2, in which the stages (2, 4, 6) comprise the same type of fuel cell blocks (10, 12, 14, 16, 18).

4. Fuel cell system (1) according to one of the preceding claims, having an end stage (8), which has an operating-gas feed (42a, 42b) which is connected to an operating-gas discharge (38a, 38b) of the preceding stage (6) and which has a further operating-gas feed which is connected to an operating-gas feed (24a, 24b) of a preceding stage.

5. Fuel cell system (1) according to Claim 4, in which the end stage (8) comprises at least two fuel cell blocks (20, 22), which each have an operating-gas feed (44a, 44b) which is connected to an operating-gas discharge (38a, 38b) of the preceding stage (6) and which have a further operating-gas feed which is connected to an operating-gas feed (24a, 24b) of a preceding stage.

6. Fuel cell system (1) according to one of the preceding claims, in which the number of fuel cells in one stage (4 or 6), compared to the number of fuel cells in a preceding stage (2 or 4), is from 25% to 40%, in particular 30% to 35%, of the number of fuel cells in the preceding stage (2 or 4).

7. Fuel cell system (1) according to one of the preceding claims, in which the fuel cell blocks (10, 12, 14, 16, 18, 20, 22) are designed for operation with pure oxygen (O₂) and pure hydrogen (H₂) .

8. Fuel cell system (1) according to one of the preceding claims, in which water separators (28a, 28b, 34a, 34b, 40a, 40b) are arranged between the stages (2, 4, 6, 8).

9. Fuel cell system (1) according to one of the preceding claims, in which a fuel cell block (20, 22) of the last stage (8) is designed as a residual-gas disposal block.

## Revendications

1. Installation ( 1 ) à piles à combustible comprenant un premier ( 2 ) et un deuxième ( 4 ) étages, chacun des deux étages ( 2 ou 4 ) ayant au moins un bloc ( 10, 12, 14 ou 16 ) de piles à combustible, une entrée ( 24a, 24b ou 30a, 30b ) pour du gaz de fonctionnement et une sortie ( 26a, 26b ou 32a, 32b ) pour du gaz de fonctionnement, la sortie ( 26a, 26b ) pour du gaz de fonctionnement du premier étage ( 2 ) communiquant avec l'entrée ( 30a, 30b ) pour du gaz de fonctionnement du deuxième étage ( 4 ) et dans laquelle le premier étage ( 2 ) a un premier nombre et le deuxième étage ( 4 ) a un deuxième nombre de piles à combustible et le premier nombre est au moins deux fois plus grand que le deuxième nombre.

2. Installation ( 1 ) à piles à combustible suivant la revendication 1 comprenant au moins un troisième étage ( 6 ) supplémentaire, qui a au moins un bloc ( 18 ) de piles à combustible, une entrée ( 36a, 36b ) pour du gaz de fonctionnement et une sortie ( 38a, 38b ) pour du gaz de fonctionnement, la sortie ( 32a, 32b ) pour du gaz de fonctionnement du deuxième étage ( 4 ) communiquant avec l'entrée ( 36a, 36b ) pour du gaz de fonctionnement du troisième étage ( 6 ) et dans laquelle le nombre des piles à combustible du deuxième étage ( 4 ) est au moins deux fois plus grand que le nombre des piles à combustible du troisième étage ( 6 ).

3. Installation ( 1 ) à piles à combustible suivant la revendication 1 ou 2, dans laquelle les étages ( 2, 4, 6 ) comprennent des blocs ( 10, 12, 14 16, 18 ) de piles à combustible du même type.

4. Installation ( 1 ) à piles à combustible suivant l'une des revendications précédentes comprenant un étage ( 8 ) final, qui a une entrée ( 42a, 42b ) pour du gaz de fonctionnement, qui communique avec une sortie ( 38a, 38b ) pour du gaz de fonctionnement de l'étage ( 6 ) précédent, et qui a une autre entrée pour du gaz de fonctionnement, qui communique avec une entrée ( 24a, 24b ) pour du gaz de fonctionnement d'un étage précédent.

5. Installation ( 1 ) à piles à combustible suivant la revendication 4, dans laquelle l'étage ( 8 ) final comprend au moins deux blocs ( 20, 22 ) de piles à combustible, qui ont respectivement une entrée ( 44a, 44b ) pour du gaz de fonctionnement, qui communique avec une sortie ( 38a, 38b ) pour du gaz de fonctionnement de l'étage ( 6 ) précédent, et qui a une autre entrée pour du gaz de fonctionnement, qui communique avec une entrée ( 24a, 24b ) pour du gaz de fonctionnement d'un étage précédent.

6. Installation ( 1 ) à piles à combustible suivant l'une des revendications précédentes, dans laquelle le nombre des piles à combustible d'un étage ( 4 ou 6 ) représente, par rapport au nombre des piles à combustible d'un étage ( 2 ou 4 ) précédent, de 25 % à 40 %, notamment de 30 % à 35 %, du nombre des piles à combustible de l'étage ( 2 ou 4 ) précédent.

7. Installation ( 1 ) à piles à combustible suivant l'une des revendications précédentes, dans laquelle les blocs ( 10, 12, 14, 16, 18, 20, 22 ) de piles à combustible sont conçus pour le fonctionnement avec de l'oxygène ( 0₂ ) pur et de l'hydrogène ( H₂ ) pur.

8. Installation ( 1 ) à piles à combustible suivant l'une des revendications précédentes, dans laquelle des séparateurs d'eau ( 28a, 28b, 34a, 34b, 40a, 40b ) sont interposés entre les étages ( 2, 4, 6, 8 ).

9. Installation ( 1 ) à piles à combustible suivant l'une des revendications précédentes, dans laquelle un bloc ( 20, 22 ) de piles à combustible du dernier étage ( 8 ) est conçu sous la forme d'un bloc d'épuration des gaz restants.
